# DEMANDE DE BREVET EUROPEEN

(11) **EP 3 327 905 A1**
(43) Date de publication de la demande: **30.05.2018**
(21) Numéro de dépôt: 17203499.3
(22) Date de dépôt: 24.11.2017
(51) Int. Cl.: H02K 5/24, H02K 5/20

(54) **MACHINE ELECTRIQUE POUR VEHICULE AUTOMOBILE**

(30) Priorité: 25.11.2016 FR 1661479
(71) Demandeur: Valeo Systemes de Controle Moteur, 95800 Cergy Saint Christophe (FR)
(72) Inventeur: LEBRASSEUR, Patrick, 95800 CERGY SAINT CHRISTOPHE (FR); MACHET, Francois, 95800 CERGY SAINT CHRISTOPHE (FR)
(74) Mandataire: Garcia, Christine

(57) **Abrégé**

L'invention concerne un ensemble de support d'une machine électrique (100) comprenant un carter (118) comportant un logement (116) d'axe longitudinal (132) à l'intérieur duquel est destiné à être monté le stator (114) de la machine électrique (100) et un couvercle (122) d'obturation d'une ouverture du logement (116) destinée à être traversée par le rotor de la machine électrique (100). Selon l'invention, le carter (1118) comprend une première pièce annulaire (126, 174) destiné à supporter radialement intérieurement le stator (114) de la machine électrique (100) et une seconde pièce (128, 186) supportant la première pièce (126, 174), la première pièce annulaire (126, 174) étant reliée à la seconde pièce (128, 186) et au couvercle (122) par l'intermédiaire de moyens élastiquement déformables.

## Description

La présente invention concerne un boîtier d'une machine électrique ainsi qu'une machine électrique et un moteur équipé d'un tel boîtier.

Dans le cas où la consigne de couple d'un moteur thermique varie brutalement et où la suralimentation du moteur visant à l'aider à suivre la consigne de couple, est uniquement obtenue grâce à un turbocompresseur, le temps de réponse de ce dernier, encore appelé « turbolag », pose problème. Pour remédier à ce problème, différentes solutions sont connues, par exemple l'utilisation de plusieurs turbocompresseurs sélectivement actifs, d'un compresseur électrique ou encore d'un compresseur mécanique centrifuge.

Un compresseur électrique de suralimentation est classiquement mis en oeuvre dans la ligne d'admission d'air d'un moteur à combustion thermique d'un véhicule automobile, en amont ou en aval d'un turbocompresseur.

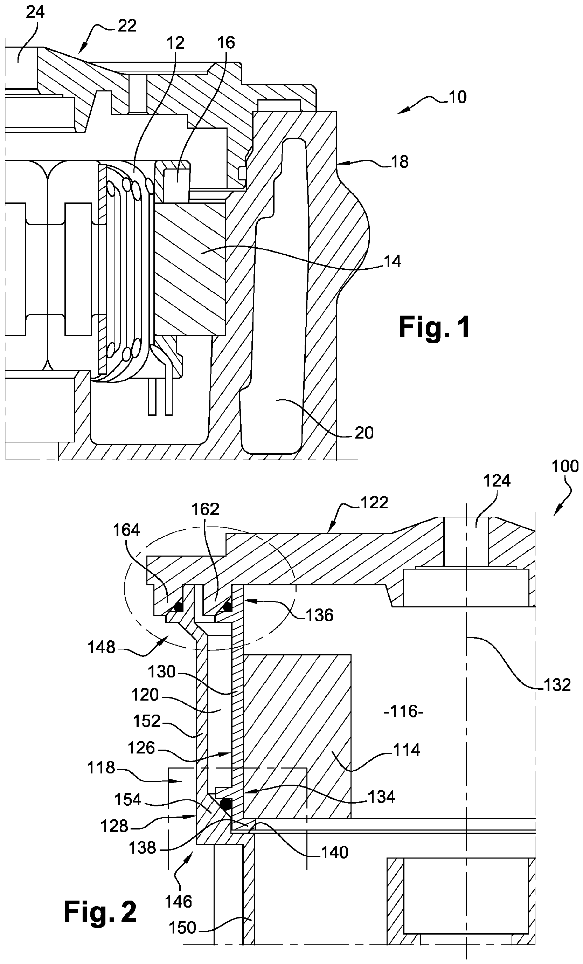

La figure 1 représente un moteur électrique 10 destiné à alimenter en puissance le compresseur. Le moteur électrique 10 comprend un rotor guidé 12 à rotation dans un stator 14 annulaire du moteur électrique 10. Le stator 14 annulaire est monté dans un logement 16 d'un carter annulaire 18 qui comprend dans son épaisseur une cavité annulaire 20 dans laquelle circule un liquide de refroidissement de la machine électrique en fonctionnement. Le compresseur comprend un couvercle 22 en appui sur le carter 18 et assurant un guidage à rotation du rotor 12. Le couvercle 22 comprend un orifice central 24 pour le passage d'arbre du rotor 12 et sa liaison à une roue de compresseur comme cela est bien connu de l'homme du métier.

En fonctionnement, le moteur électrique fournit la puissance nécessaire à la rotation de la roue de compression permettant ainsi l'augmentation temporaire du rendement de compression. Toutefois, cet assemblage est source de nuisances sonores dans le véhicule automobile. En effet, les efforts électromagnétiques appliqués au rotor et au stator en fonctionnement conduisent à des microdéplacements du rotor et du stator relativement l'un à l'autre à des hautes fréquences audibles, typiquement entre 1000 et 20000Hz. Ces vibrations qui sont transmises par le stator au carter solidaire du bâti structural du véhicule automobile, induisent une augmentation du fond sonore audible dans l'environnement immédiat du véhicule. A la différence des autres sources de bruits, ce type de sources sonores est intrinsèque au fonctionnement du moteur électrique et cela s'avère difficile à éliminer.

L'invention propose d'apporter une solution efficace, simple et économique aux problèmes précités.

A cette fin, elle propose un ensemble de support d'une machine électrique comprenant un carter comportant un logement, d'axe longitudinal, à l'intérieur duquel est destiné à être monté le stator de la machine électrique et un couvercle d'obturation d'une ouverture du logement destinée à être traversée par le rotor de la machine électrique, caractérisé en ce que le carter comprend une première pièce annulaire destinée à supporter radialement intérieurement le stator de la machine électrique et une seconde pièce supportant la première pièce, la première pièce annulaire étant reliée à la seconde pièce et au couvercle par l'intermédiaire de moyens élastiquement déformables.

Selon l'invention, le stator de la machine électrique est relié au carter et au couvercle par des moyens intercalaires qui sont élastiquement déformables, permettant ainsi d'éviter la transmission des vibrations haute fréquence du stator vers le carter. Dès lors, les nuisances sonores sont réduites, ce qui permet d'améliorer le confort acoustique à l'intérieur d'un habitacle d'un véhicule automobile.

Dans une réalisation possible, les moyens élastiquement déformables comprennent des joints annulaires intercalés entre une première extrémité longitudinale de la première pièce annulaire et la seconde pièce et entre le couvercle et une seconde extrémité longitudinale de la première pièce annulaire opposée à la première extrémité.

Selon une autre caractéristique de l'invention, l'une de la première pièce annulaire et de la seconde pièce peut comprendre une face annulaire de centrage et d'appui de la première pièce sur la seconde pièce, cette face annulaire étant inclinée en oblique par rapport à l'axe longitudinal et un joint annulaire étant appliquée sur celle-ci et maintenu dans un renfoncement annulaire d'une portion annulaire en L de l'autre de la première pièce annulaire et de la seconde pièce.

Ce type de configuration permet d'absorber les vibrations tout en réalisant, de manière simple, le centrage de la première pièce du carter sur la seconde pièce du carter au moyen des faces inclinées en oblique.

Egalement, l'une de la première pièce annulaire et du couvercle peut comprendre une face annulaire de centrage et d'appui du couvercle sur la première pièce, cette face étant inclinée en oblique par rapport à l'axe longitudinal et un joint annulaire étant appliquée sur celle-ci et maintenu dans un renfoncement annulaire d'une portion annulaire en L de l'autre de la première pièce annulaire et du couvercle. Dans cette configuration, on réalise de manière simple le centrage du couvercle sur la première pièce du carter.

Selon une autre caractéristique de l'invention, la face annulaire de centrage et d'appui de la première pièce sur la seconde pièce est formée sur la seconde pièce et la face annulaire de centrage et d'appui du couvercle sur la première pièce est formée sur le couvercle, les normales auxdites faces annulaires convergents l'une vers l'autre vers l'axe longitudinal.

Le couvercle peut comprendre une autre face annulaire inclinée en oblique par rapport à l'axe longitudinal en appui sur un joint annulaire agencé dans un renfoncement annulaire d'une portion annulaire en L de la seconde pièce pour le centrage et l'appui du couvercle sur la seconde pièce. De cette manière, le couvercle est ainsi centré et en appui sur la seconde extrémité de chacune de la première pièce et de la seconde pièce.

Dans une autre réalisation pratique de l'invention, la première extrémité et la seconde extrémité de la première pièce comprennent chacune deux gorges annulaires coaxiales formées dans une face cylindrique et une face radiale, chacune desdites faces cylindriques et radiale recevant un joint annulaire compressé sur des faces cylindriques et radiales correspondantes en vis-à-vis de la seconde pièce et du couvercle.

La seconde pièce peut être annulaire et entourer la première pièce de manière à définir avec celle-ci une espace annulaire de circulation d'un liquide de refroidissement.

L'invention concerne également une machine électrique, comprenant un ensemble tel que décrit précédemment, un stator étant agencé à l'intérieur de la première pièce et un rotor étant engagé à l'intérieur du stator.

L'invention concerne encore un compresseur électrique de suralimentation pour véhicule automobile, comportant une roue de compression et une machine électrique d'entrainement de la roue de compression en rotation.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1, décrite précédemment, est une vue schématique en coupe d'une machine électrique selon la technique antérieure ;
- la figure 2 est une demi-vue schématique en coupe d'une machine électrique selon une première réalisation de l'invention ;
- la figure 3A est une vue schématique à plus grande échelle de la zone rectangulaire délimitée en pointillée sur la figure 2 ;
- la figure 3B est une vue similaire à la figure 3A sans le joint annulaire ;
- la figure 4A est une vue schématique à plus grande échelle de la zone ovale délimitée en pointillée sur la figure 2 ;
- la figure 4B est une vue similaire à la figure 4A sans les joints annulaires ;
- la figure 5 est une vue schématique en coupe d'une seconde réalisation de l'invention.

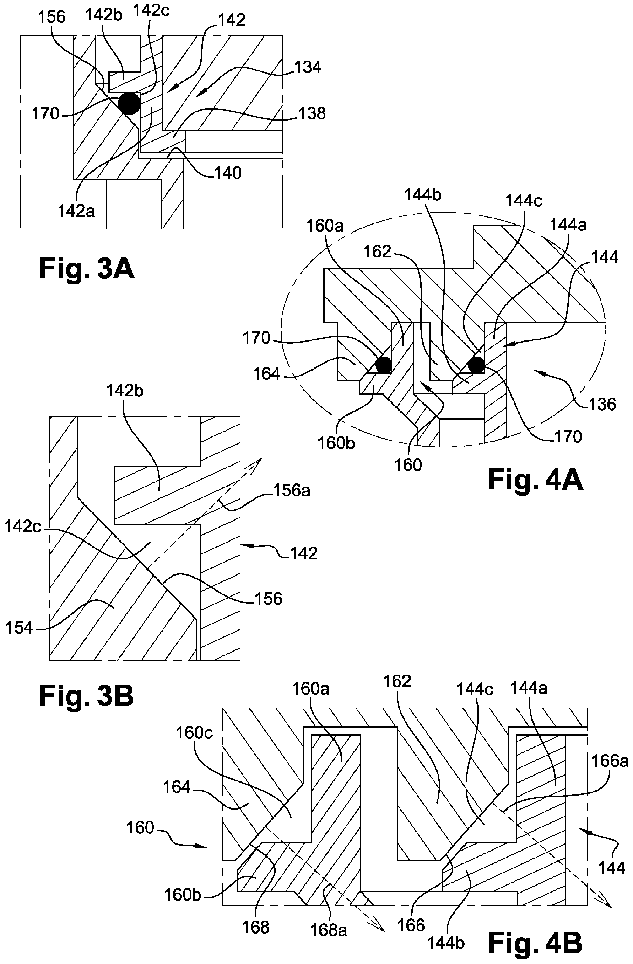

On se réfère simultanément aux figures 2 et 3 qui représentent une première réalisation de l'invention. Pour rappel, la figure 1 relative à la technique antérieure a déjà été décrite précédemment. Les éléments portant les mêmes dénominations sont référencés par un numéro augmenté d'une centaine.

La machine électrique selon l'invention est configurée pour empêcher la propagation des fréquences créée par les efforts électromagnétiques appliqués au stator et au rotor, efforts qui conduisent à des microdéplacements du rotor et du stator relativement l'un à l'autre à des hautes fréquences audibles, typiquement entre 1000 et 20000Hz.

Comme expliqué précédemment, ces vibrations qui sont transmises par le stator au carter solidaire du bâti structural du véhicule automobile, induisent une augmentation du fond sonore audible dans l'environnement immédiat du véhicule.

Pour cela, l'invention consiste à découpler le stator 114 du reste de la machine électrique par l'utilisation de moyens élastiquement déformables.

Ainsi, aucun contact rigide n'existe entre le stator 114 et le reste de la machine électrique ce qui permet de stopper correctement le bruit.

Plus précisément, dans la machine électrique selon l'invention 100 le carter 118 entourant le stator 114 du moteur électrique est réalisé en deux pièces distinctes que sont la première pièce 126 et la seconde pièce 128.

Selon un mode de réalisation, la première pièce 126 et la seconde pièce 128_ sont des pièces annulaires. La première pièce 126 définit intérieurement un logement 116 recevant le stator 114 et le rotor (non représenté) de manière similaire à ce qui a été décrit en référence à la figure 1. Elle entoure le stator 114 et est elle-même entourée par la seconde pièce 128 annulaire. La première 126 et la seconde 128 pièces définissent entre elles un espace 120 annulaire de circulation d'un liquide de refroidissement.

Selon un mode de réalisation de l'invention, le logement 116 recevant le stator 114 et le rotor, est tubulaire.

Selon un mode de réalisation, la première pièce 126 annulaire comprend une paroi cylindrique 130 ayant pour axe 132 celui du logement 116. La première pièce 126 comprend une première extrémité 134 longitudinale et une seconde extrémité 136 longitudinale, selon l'axe 132, la seconde extrémité 136 étant agencée en vis-à-vis du couvercle 122. Dans la description, le terme « radialement » est utilisé en référence à l'axe 132 du logement 116. Un rebord annulaire 138 s'étendant radialement vers l'intérieur est formé au niveau de la première extrémité 136 longitudinale de la paroi cylindrique de la première pièce 126. Ce rebord annulaire radial 138 est agencé en vis-à-vis longitudinal d'un épaulement 140 annulaire interne radial de la seconde pièce 128 sans toutefois être en contact avec celui-ci pour éviter une transmission des vibrations de la première pièce 126 vers la seconde pièce 128 comme cela apparaitra plus clairement ultérieurement.

Selon un mode de réalisation, la première extrémité 134 de la première pièce 126 comprend une portion annulaire 142 en L formée par une portion d'extrémité 142a de la paroi cylindrique 130 et un rebord annulaire radial 142b s'étendant radialement vers l'extérieur (figure 4). Cette portion annulaire 142 en L de la première extrémité 134 de la première pièce 126 délimite radialement vers l'extérieur un renfoncement annulaire 142c en L. Au voisinage de sa seconde extrémité 136, la première pièce 126 comprend, une portion annulaire 144 en L formée par une portion d'extrémité 144a de la paroi cylindrique 130 et un rebord annulaire radial 144b s'étendant radialement vers l'extérieur. Cette portion annulaire 144 en L de la seconde extrémité 136 de la première pièce 126 délimite radialement vers l'extérieur un renfoncement annulaire 144c en L. On remarque que les portions 142, 144 en L de la première pièce 126 sont symétriques l'une de l'autre par rapport à un plan perpendiculaire à l'axe 132 du logement 116.

Selon un mode de réalisation, la seconde pièce annulaire 128 comprend une première extrémité 146 et une seconde extrémité 148, la seconde extrémité 148 étant agencée en vis-à-vis du couvercle 122. La première extrémité 146 de la seconde pièce 128 se prolonge au niveau de l'épaulement annulaire 140 par une paroi cylindrique 150. La seconde pièce 128 comprend une paroi cylindrique 152 comportant à sa première extrémité 146 un renflement annulaire 154 radialement interne comportant une face 156 annulaire inclinée en oblique de manière à ce que la normale 156a à cette face 156 soit orientée en direction du couvercle 122 et de l'axe longitudinal 132. Cette face 156 est agencée en vis-à-vis du renfoncement annulaire 142c en L de la première extrémité 136 de la première pièce 126. La seconde extrémité 148 de la seconde pièce 128 comprend une portion 160 en L formée par une portion d'extrémité cylindrique 160a et un rebord annulaire radial 160b s'étendant radialement vers l'extérieur. Cette portion annulaire 160 en L de la seconde extrémité 148 de la seconde pièce 128 délimite radialement vers l'extérieur un renfoncement annulaire 160c en L. Cette portion 160 en L de la seconde extrémité 148 de la seconde pièce 128 est orientée dans l'espace de la même façon que la portion 144 en L de la seconde extrémité 136 de la première pièce 126 et est agencée longitudinalement à la même position le long de l'axe 132.

Selon un mode de réalisation, le couvercle 122 comprend deux nervures annulaires radialement interne 162 et radialement externe 164 en saillie à l'intérieur du logement 116 comprenant chacune une face annulaire 166, 168 inclinée en oblique par rapport à l'axe 132. Les normales 166a, 168a aux faces annulaires 166, 168 des nervures internes 162 et externe 164 sont orientées en direction de l'axe longitudinal 132. Chacune de ces normales 166a, 168a convergent vers la normale 156 à la face annulaire 156 de la première extrémité 136 de la paroi cylindrique 130 de la seconde pièce 126, en direction de l'axe 132 du logement 116. Les normales 166a, 168a des faces annulaires 166, 168 des nervures 162, 164 sont sensiblement parallèles entre elles.

Selon un mode de réalisation, les nervures 162, 164 du couvercle 122 sont positionnées et dimensionnés de manière à ce que la face annulaire 168 de la nervure externe 164 vienne en vis-à-vis du renfoncement annulaire 160c en L de la seconde extrémité 148 de la seconde pièce et à ce que la face annuaire 166 de la nervure interne 162 vienne en vis-à-vis du renfoncement annulaire 144c en L de la seconde extrémité 136 de la première pièce 126.

Selon l'invention, des moyens élastiquement déformables sont montés dans les renfoncements annulaires 142c, 144c, 160c des portions 142, 144, 160, en L de manière à être intercalés entre les faces annulaires 156, 166, 168 de la seconde pièce 128 et du couvercle 122 et les portions 142, 144, 160 en L des première pièce 126 et seconde pièce 128. Ces moyens élastiquement déformables sont par exemple des joints annulaires 170, s'étendant sur 360°, qui peuvent être réalisés en élastomère. Ces joints annulaires 170 ont une section circulaire mais d'autres formes pourraient également convenir.

La réalisation de la figure 2 utilisant des faces inclinées 156, 166, 168 sur l'une de la seconde pièce 128 et du couvercle 122 et une portion 142, 144, 160 en L sur l'autre de la première 126 et de la seconde 128 pièces permet de réaliser de manière simple un centrage et un appui de la première pièce 126 sur la seconde pièce 128 et un centrage et un appui du couvercle 122 sur la première pièce 126 et la seconde pièce 128.

Dans une autre variante, la portion 142 en L de la première extrémité 134 de la première pièce 126 pourrait être formée sur la première extrémité 146 de la seconde pièce 128, la première extrémité 134 de la première pièce 126 comprenant alors une face inclinée pour l'appui du joint annulaire 170. De même, la portion 144 en L de la seconde extrémité 136 de la première pièce 126 pourrait être formée sur la nervure interne 162 du couvercle 122, la seconde extrémité 136 de la première pièce 126 comprenant alors une face inclinée pour l'appui du joint annulaire 170. Egalement, la portion 160 en L de la seconde extrémité 148 de la seconde pièce 128 pourrait être formée sur la nervure externe 164, la seconde extrémité 148 de la seconde pièce 128 comprenant alors une face inclinée pour l'appui du joint annulaire 170.

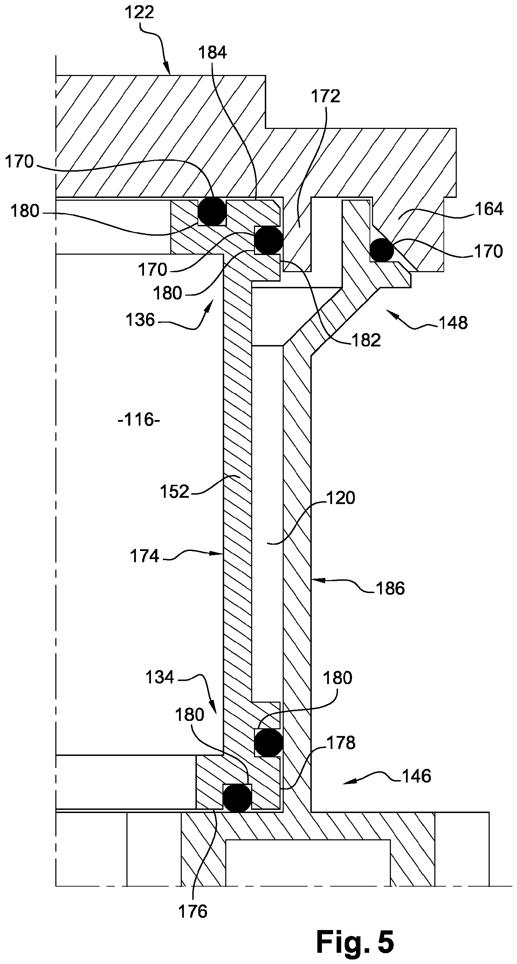

Dans une seconde réalisation de l'invention représentée en figure 5, le couvercle 122 comprend également deux nervures annulaires interne 172 et externe 164. La nervure radialement externe 164 de cette réalisation est identique à la nervure radialement externe 164 de la réalisation précédente. Toutefois, la nervure radialement interne 172 est dépourvue de face inclinée en oblique. La nervure interne 172 présente ainsi une section sensiblement rectangulaire. La première pièce 174 comprend une paroi cylindrique 152 dont la première extrémité 134 comprend une face radiale 176 et une face cylindrique 178 reliées l'une à l'autre et comportant chacune une gorge annulaire 180. De même, la seconde extrémité 136 de la première pièce 174 comprend une face radiale 182 et une face cylindrique 184 reliées l'une à l'autre et comportant chacune une gorge annulaire 180.

Selon un mode de réalisation, chaque gorge annulaire 180 loge un joint annulaire 170 similaire à ce qui a ceux décrits en référence à la précédente réalisation. Les joints annulaires 170 des gorges annulaires 180 de la première extrémité 134 de la première pièce 174 sont en appui sur des faces radiale et cylindrique de la seconde pièce 186 tandis que les joints annulaires 170 des gorges annulaires 180 de la seconde extrémité 136 de la première pièce 174 sont en appui sur une face du couvercle 122 et sur une face radiale de la nervure interne 172. La seconde extrémité 148 de la seconde pièce 186 est reliée à étanchéité et amortissement des vibrations par un joint annulaire 170 de manière similaire à ce qui a été décrit en référence à la figue 2.

Dans les réalisations représentées aux figures, les joints annulaires 170 sont dimensionnés de manière à ce qu'il n'y ait aucun contact entre la première pièce 126, 174 et la seconde pièce 128, 186.

Ainsi, dans les différentes réalisations de l'invention, l'interposition de moyens élastiquement déformables entre les première pièce 126, 174 et seconde pièce 128, 186 permet de réaliser un découplage statique de la première pièce 126, 174 supportant le stator 114 du moteur électrique d'avec la seconde pièce 128, 186, ce qui permet d'éviter la transmissions des vibrations intrinsèques au fonctionnement du moteur électrique jusqu'au bâti du véhicule automobile puis à l'habitacle.

## Revendications

1. Ensemble de support d'une machine électrique (100) comprenant un carter (118) comportant un logement (116) d'axe longitudinal (132) à l'intérieur duquel est destiné à être monté le stator (114) de la machine électrique (100) et un couvercle (122) d'obturation d'une ouverture du logement (116) destinée à être traversée par le rotor de la machine électrique (100), **caractérisé en ce que** le carter (1118) comprend une première pièce (126, 174) annulaire destinée à supporter radialement intérieurement le stator (114) de la machine électrique (100) et une seconde pièce (128, 186) supportant la première pièce (126, 174), la première pièce (126, 174) étant reliée à la seconde pièce (128, 186) et au couvercle (122) par l'intermédiaire de moyens élastiquement déformables.

2. Ensemble selon la revendication 1, **caractérisée en ce que** les moyens élastiquement déformables comprennent des joints annulaires (170) intercalés entre une première extrémité (134) longitudinale de la première pièce annulaire (126, 174) et de la seconde pièce (128, 186) et entre le couvercle (122) et une seconde extrémité (136) longitudinale de la première pièce annulaire (126, 174) opposée à la première extrémité (134).

3. Ensemble la revendication 2, **caractérisé en ce que** l'une de la première pièce annulaire (126" 174) et de la seconde pièce (128, 186) comprend une face annulaire (156) de centrage et d'appui de la première pièce (126, 174) sur la seconde pièce (128, 186), cette face annulaire (156) étant inclinée en oblique par rapport à l'axe longitudinal (132) et un joint annulaire (170) étant appliquée sur celle-ci et maintenu dans un renfoncement annulaire (142c) d'une portion annulaire (142) en L de l'autre de la première pièce (126, 174) annulaire et de la seconde pièce (128, 186).

4. Ensemble selon la revendication 2 ou 3, **caractérisée en ce que** l'une de la première pièce annulaire (126, 174) et du couvercle (122) comprend une face annulaire (166) de centrage et d'appui du couvercle (122) sur la première pièce (126, 174), cette face (166) étant inclinée en oblique par rapport à l'axe longitudinal (132) et un joint annulaire (170) étant appliquée sur celle-ci et maintenu dans un renfoncement annulaire (144c) d'une portion annulaire (144) en L de l'autre de la première pièce annulaire (126, 174) et du couvercle (122).

5. Ensemble selon les revendications 3 et 4, **caractérisé en ce que** la face annulaire (156) de centrage et d'appui de la première pièce (126, 174) sur la seconde pièce (128, 186) est formée sur la seconde pièce (128, 186) et la face annulaire (166) de centrage et d'appui du couvercle (122) sur la première pièce (126, 174) est formée sur le couvercle (122), les normales (156a, 166a) auxdites faces annulaires (156, 166) convergents l'une vers l'autre vers l'axe longitudinal.

6. Ensemble selon la revendication 5, **caractérisé en ce que** le couvercle (122) comprend une autre face annulaire (168) inclinée en oblique par rapport à l'axe longitudinal (132) en appui sur un joint annulaire (170) agencé dans un renfoncement annulaire (160c) d'une portion annulaire (160) en L de la seconde pièce (128, 186) pour le centrage et l'appui du couvercle (122) sur la seconde pièce (128, 186).

7. Ensemble selon la revendication 2, **caractérisé en ce que** la première extrémité (134) et la seconde extrémité (136) de la première pièce (126, 174) comprennent chacune deux gorges annulaires (180) coaxiales formées dans une face cylindrique (178, 182) et une face radiale (176, 184), chacune desdites faces cylindrique (178, 182) et radiale (176, 184) recevant un joint annulaire (170) compressé sur des faces cylindriques et radiales correspondantes en vis-à-vis de la seconde pièce (128, 186) et du couvercle (122).

8. Ensemble selon l'une des revendications 1 à 7, **caractérisé en ce que** la seconde pièce (128, 186) est annulaire et entoure la première pièce (126, 174) de manière à définir avec celle-ci une espace annulaire (120) de circulation d'un liquide de refroidissement.

9. Machine électrique, **caractérisée en ce qu'**elle comprend un ensemble selon l'une des revendications précédentes, un stator (114) étant agencé à l'intérieur de la première pièce (126, 174) et un rotor étant engagé à l'intérieur du stator (114).

10. Compresseur électrique de suralimentation pour véhicule automobile, comportant une roue de compression et une machine électrique (100) selon la revendication 9 d'entrainement de la roue de compression en rotation.
